# EUROPEAN PATENT APPLICATION

(11) **EP 2 284 676 A1**
(43) Date of publication of application: **16.02.2011**
(21) Application number: 09746611.4
(22) Date of filing: 13.05.2009
(51) Int. Cl.: G06F 3/048, H04M 1/00

(54) **PORTABLE COMMUNICATION TERMINAL AND DISPLAY METHOD AND PROGRAM THEREOF**

(30) Priority: 13.05.2008 JP 2008126501
(71) Applicant: NEC Corporation, Minato-ku Tokyo 108-8001 (JP)
(72) Inventor: YOSHINO, Yukiko, Kodama-gun Saitama 367-0297 (JP)
(74) Representative: Vossius & Partner
(86) International application number: PCT/JP2009/058888
(87) International publication number: WO 2009/139405

(57) **Abstract**

To provide a portable communication terminal which can comprehensively change a displaying size of all of a pictogram, a soft key, or the like that are displayed in a screen in conjunction with a switching of a display mode, a display method therefor, and a program.

The portable communication terminal has a display unit for displaying information, a display mode switching unit for performing a switching of the display mode which determines a character size displayed in the display unit, and a display mode selection input unit for receiving a selection input of the display mode. The displaying size of all including a character, a pictogram, and a shift key that are displayed in a front liquid crystal 24 and a rear liquid crystal 26 is comprehensively changed based on the selection input of the display mode received by the display mode selection input unit.

## Description

### [Technical field]

The present invention relates to a portable communication terminal, and a display method and a program therefor.

### [Background art]

In general, a portable communication terminal has a display unit composed of a liquid crystal display or the like. However, because it is requested to make the terminal case of the portable communication terminal small and lightweight, a screen size of the display unit is limited within a predetermined range. Namely, an amount of information which can be displayed in the screen of the portable communication terminal is limited. Therefore, a technology with which a user can easily confirm the information displayed in the screen has been required.

For example, a technology with which when an amount of information to be displayed exceeds the amount of information that can be displayed in a display screen of the display unit, first, the coordinate of a reference point is specified by using a mouse or a touch pen and by performing enlargement and reduction around the specified reference point, an area not displayed in the display unit is visually moved to display the area, is disclosed (for example, patent document 1).

In order to facilitate confirmation of a state of the portable communication terminal, a pictogram that is a small pattern and usually displayed in a display screen has been used. However, since various pictograms have been used, there were problems that a user cannot recognize the meaning of all the pictograms or even when the user can recognize it, the user cannot understand how to operate with the pictograms. In order to solve these problems, a technology with which the pictogram indicating the state of the portable communication terminal can be selected and whereby a process of the selected pictogram is performed is disclosed (for example, patent document 2). Additionally, a technology with which the pictogram is displayed in the display screen by selecting any one from the forms of the pictograms registered in the portable communication terminal, in advance according to a display state of a pictogram display area by switching a mode, is disclosed (for example, patent document 3).

A larger size of a character displayed in the screen has been requested by the elderly people or the like. In order to comply with the request, the portable communication terminal including a mode in which only enlarged characters can be displayed has been developed. However, on the contrary, there is a request of a character with a smaller size for users to confirm the information displayed in the screen easily. In order to solve the problem, a technology, with which the character displayed in the screen is reduced or enlarged stepwisely with keeping a ratio of the character displayed in the screen constant according to the input from the user, is disclosed (for example, patent document 4).

### [Prior art document]

### [Patent document]

[patent document 1] Japanese Patent Application Laid-Open No. 2005-100199
[patent document 2] Japanese Patent Application Laid-Open No. 2006-277467
[patent document 3] Japanese Patent Application Laid-Open No. 2007-267221
[patent document 4] Japanese Patent Application Laid-Open No. 2006-072882

### [Summary of the invention]

### [Problems to be solved by the invention]

However, in the technology described in the above-mentioned patent document 1, when the user desired to perform the reduction and the enlargement, the user had to perform a process for the reduction and the enlargement for each time. Therefore, the operation was complex for the users. In the technology described in the above-mentioned patent document 2, although the process could be easily performed by selecting the pictogram, there was a problem that it is difficult for users such as elderly people or the like to recognize the displayed pictogram because the pictogram itself was small.

In the technology described in the above-mentioned patent document 3, there was a problem that a pictogram could not be always displayed in a size of the user desired because the form of the pictogram had to be selected from the pictograms registered in advance and additionally, the form of the pictogram changed according to the state of the portable communication terminal. In the technology described in the above-mentioned patent document 4, there was a problem that when the reduction and enlargement display process was performed in the portable communication terminal, only the size of the character was reduced and increased, and the size of the pictogram or the size of a soft key or the like were not changed. Furthermore, it was necessary to select the size of the character from many kinds of sizes in order to perform the reduction and the enlargement of the character displayed in the screen, Therefore, there was a problem that the operation was difficult for elderly people or the like.

The present invention is made in consideration of such actual condition. The object of the present invention is to provide a portable communication terminal in which a displaying size of all of the pictogram, the soft key, and the like that are displayed in the screen can be comprehensively changed in conjunction with the switching of the display mode, and a display method and a program therfor.

### [Solution to the problems]

The portable communication terminal of the present invention is characterized by including a display unit for displaying the information, a display, mode switching unit for performing the switching of the display mode that determines the character size displayed in the display unit, a display mode selection input unit for receiving a selection input of the display mode, and a displaying size changing unit for comprehensively changing the displaying size of all including the character, the pictogram, and the shift key that are displayed in the display unit based on the selection input of the display mode received by the display mode selection input unit.

The portable communication terminal of the present invention is characterized in that the portable communication terminal has only two display modes, a reduced display mode and an enlarged display mode. The display mode selection input unit receives the selection input of the display mode by long pressing of a numeric key.

The display method of the portable communication terminal of the present invention is characterized by including a step of receiving the selection input of the display mode that determines the character size displayed in the display unit for displaying the information, a step of performing the switching of the display mode, and a step of comprehensively changing the displaying size of all including the character, the pictogram, and the shift key that are displayed in the display unit based on the selection input received in the step of receiving the selection input.

The program of the present invention causes a computer to execute a process for receiving the selection input of the display mode that determines the character size displayed in the display unit for displaying the information, a process for performing the switching of the display mode, and a process for comprehensively changing the displaying size of all including the character, the pictogram, and the shift key that are displayed in the display unit based on the selection input received in the process for receiving the selection input.

### [Effect of the invention]

By using the present invention, in the portable communication terminal, the displaying size of all of the pictogram, the soft key, and the like that are displayed in the screen can be easily changed in conjunction with the switching of the display mode.

### [Brief description of the drawings]

[Fig. 1] Fig. 1 is a block diagram showing an example of a schematic configuration of the portable communication terminal according to the exemplary embodiment.
[Fig. 2] Fig. 2 is a view showing an example of the screen displayed in a front liquid crystal of the portable communication terminal when the reduced display mode is selected according to the exemplary embodiment.
[Fig. 3] Fig. 3 is a view showing an example of the screen displayed in a front liquid crystal of the portable communication terminal when the enlarged display mode is selected according to the exemplary embodiment.
[Fig. 4] Fig. 4 is a flowchart showing an example of a flow of a process for performing the switching between the reduced display mode and the enlarged display mode.

### [Exemplary embodiments]

An example of the exemplary embodiment of the present invention is described in detail below by using the drawings.

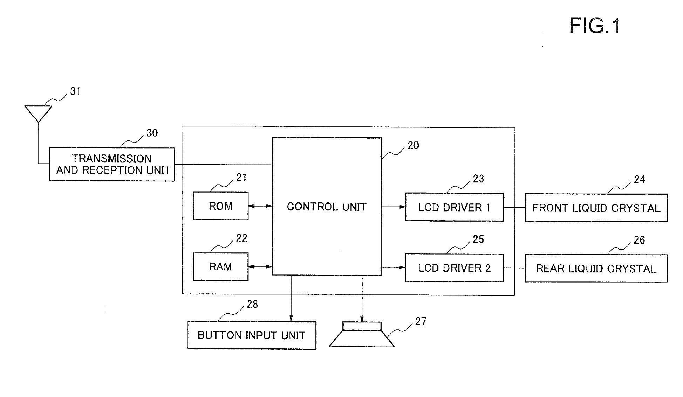

Fig. 1 shows an example of a schematic configuration of the portable communication terminal according to the exemplary embodiment. As shown in Fig. 1, the portable communication terminal according to the exemplary embodiment includes a control unit 20, a ROM (Read-Only Memory) 21, a RAM (Random Access Memory) 22, a LCD (Liquid Crystal Display) driver 1 23, a front liquid crystal 24, a LCD driver 2 25, a rear liquid crystal 26, a button input unit 28, and a transmission and reception unit 3 0.

The control unit 20 is connected to the ROM 21, the RAM 22, the LCD driver 1 23, the front liquid crystal 24, the LCD driver 2 25, the rear liquid crystal 26, the button input unit 28, the transmission and reception unit 30, and the like and controls each function. The ROM 21 is a memory which records a control program, setting information, and the like. In the exemplary embodiment, a display content such as a setting value or the like used for the reduced display mode and the enlarged display mode is stored. The RAM 22 is a memory used for data storage and also used as a working area.

The LCD driver 1 23 is a software for operating the front liquid crystal 24. The LCD driver 2 25 is a software for operating the rear liquid crystal 26. The front liquid crystal 24 is for example, a liquid crystal located in the inside of a fold type portable communication terminal when the fold type portable communication terminal is folded. On the other hand, the rear liquid crystal 26 is for example, a liquid crystal located in the outside of the fold type portable communication terminal when the fold type portable communication terminal is folded. Consequently, the rear liquid crystal 26 can display the information for users even when the fold type portable communication terminal is in a folded state.

The button input unit 28 is a button including the numeric key or the like and an input circuit which receives the information inputted by the button operation. In the fold type portable communication terminal, a button arranged in the outside of the case when it is in the folded state is included. The transmission and reception unit 30 for example, converts the data inputted from the control unit 20 or the like into a transmission signal, wirelessly transmits it to a near base station (not shown in the drawing), receives and demodulates the signal from a partner terminal or the like that is wirelessly transmitted by the near base station, and supplies it to the control unit 20.

Further, in the exemplary embodiment, although the display unit of the portable communication terminal has the liquid crystal, in particular, it is not limited to this and anything can be used if it can display information. When the portable communication terminal is not the fold type portable communication terminal, it goes without saying that the LCD driver 2 25 and the rear liquid crystal 26 are not necessarily needed.

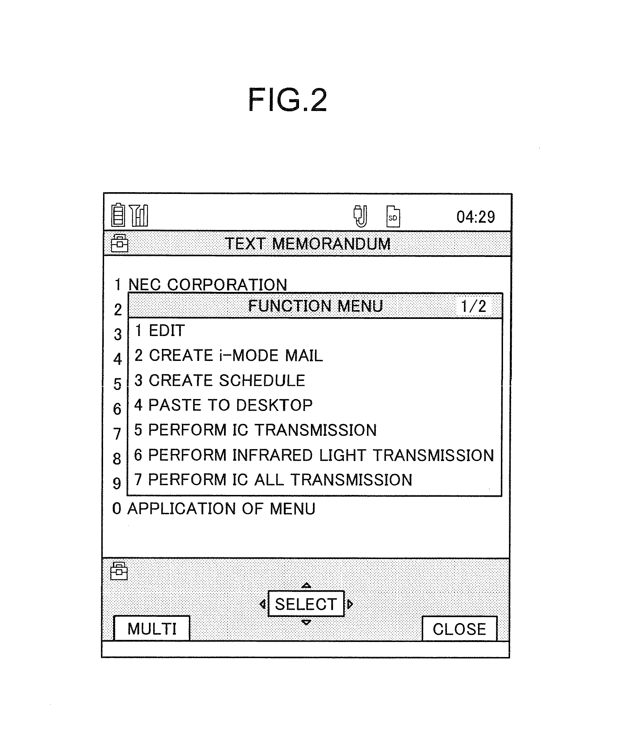

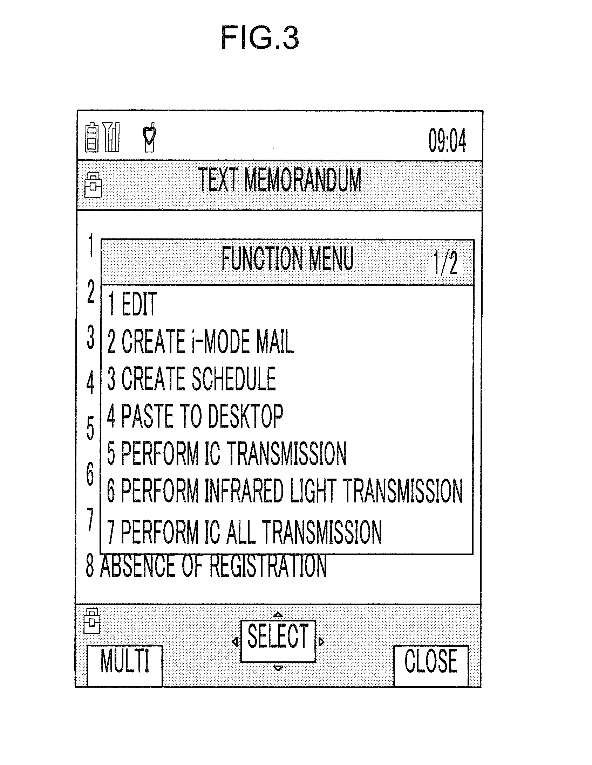

The portable communication terminal according to the exemplary embodiment has the reduced display mode and the enlarged display mode. Fig. 2 shows an example of the screen displayed in the front liquid crystal 24 when the reduced display mode is set. On the other hand, Fig. 3 shows an example of the screen displayed in the front liquid crystal 24 when the enlarged display mode is set. As shown in Fig. 2, when the reduced display mode is set, all of the pictogram display such as a battery, an electric field bar, or the like and the character, a function name, a list display, and the like that are displayed in the screen are displayed in smaller size. On the other hand, when the enlarged display mode is set, as shown Fig. 3, the pictogram display such as the battery, the electric field bar, or the like, and the soft key are displayed in a slightly larger size in comparison with Fig. 2. Further, the size of the character of the function name, the list display, or the like is made larger and easier to read. However, an amount of information that can be displayed in one line is the same as that in Fig. 2 since a width of one character is constant.

An example of the configuration of the switching from the reduced display mode to the enlarged display mode will be described as the example of the configuration of the switching of the above-mentioned display mode. First, when an input for switching a menu screen from the reduced display mode to the enlarged display mode is performed to the button input unit 28, the signal is transmitted to the ROM 21 via the control unit 20. Next, a setting value used when displaying in the enlarged display mode is obtained from the ROM 21 and the obtained information such as the setting value and the like is transmitted to the control unit 20. The switching of the display mode is performed and the screen of the enlarged display mode based on the information such as the above-mentioned setting value and the like is displayed in the front liquid crystal 24 via the LCD driver 1 23. In the screen display of the front liquid crystal 24 whose mode is switched to the enlarged display mode, all of the pictogram, the soft key, and the others such as the character size or the like that are displayed are displayed in large size and the screen display becomes easy to read compared with the screen in the reduced display mode.

In order to further facilitate the switching operation of each display mode as mentioned above, a setting may be performed in advance so that the switching of the display mode is performed by long pressing of the menu number or the numeric key. A button for switching the display mode may be provided.

Fig. 2 and Fig. 3 show the screen in which Japanese language is displayed in the liquid crystal as an example. However, in the portable communication terminal including a function to display another language such as English or the like, even when the portable communication terminal displays other languages such as English or the like, the reduced display mode and the enlarged display mode can be set. Namely, even when the language other than Japanese is displayed in the liquid crystal, the displaying size of all including the character, the pictogram, the soft key, and the like that are displayed in the screen can be comprehensively changed in conjunction with the switching of the display mode.

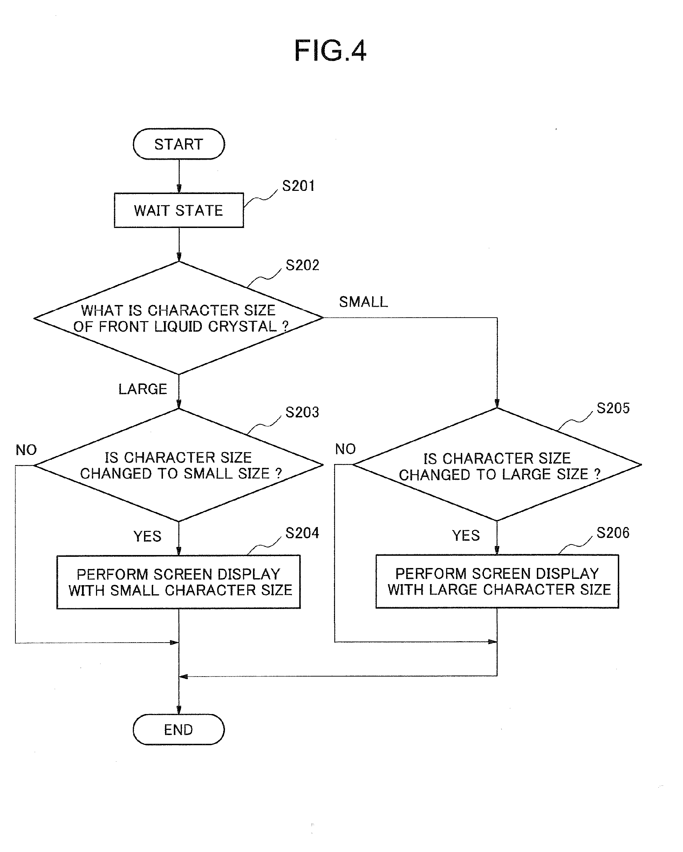

Fig. 4 shows an example of a flow of a process for performing the switching between the reduced display mode and the enlarged display mode in the portable communication terminal according to the exemplary embodiment. The example of the switching operation between the reduced display mode and the enlarged display mode in the portable communication terminal will be described by using the flowchart shown in Fig. 4.

First, in a wait state (Step S201), the character size displayed in the front liquid crystal 24 is confirmed to determine the set display mode, that is either the enlarged display, mode or the reduced display mode. Namely, it is determined whether the character size displayed in the front liquid crystal 24 is large or small (Step S202).

When the enlarged display mode is set and the character size displayed in the front liquid crystal 24 is large (Step S202/ large), input, which indicates either to switch the display mode to the reduced display mode so that the character size displayed in the front liquid crystal 24 will be changed to a smaller size or not, is received from the user (Step S203). When the input indicating that the character size is changed to a smaller size is received (step S203/ YES), the setting value of the reduced display mode is obtained from the ROM 21. Then, making the character size small and displaying in the front liquid crystal 24 is done (Step S204). After that, the process is ended. When the input indicating that the character size is changed to the smaller size is not received (step S203/ NO), the display mode is not changed and the process is ended. Further, the screen displayed in the front liquid crystal 24 in the above-mentioned step S204 is a screen in which the screen displaying size of all including the pictogram, the soft key, and the display such as the function name or the like is reduced compared with the screen displaying size of them in the enlarged display mode, and an amount of information which can be displayed in one screen is large.

On the other hand, when the reduced display mode is set and the character size displayed in the front liquid crystal 24 is small (Step S202/ small), input, which indicates either to switch the display mode to the enlarged display mode so that the character size displayed in the front liquid crystal 24 will be changed to a larger size or not, is received from the user (Step S205). When the input indicating that the character size is changed to the larger size is received (step S205/ YES), the setting value of the enlarged display mode is obtained from the ROM 21. Then making the character size large and displaying in the front liquid crystal 24 is done (Step S206). After that, the process is ended. When the input indicating that the character size is changed to the large size is not received (step S205/ NO), the display mode is not changed and the process is ended. Further, the screen displayed in the front liquid crystal 24 in the above-mentioned step S206 is a screen in which the screen displaying size of all including the pictogram, the soft key, and the display such as the function name or the like is enlarged compared with the screen displaying size of them in the reduced display mode, and an amount of information which can be displayed in one screen is small but the information can be easily read.

Further, in the exemplary embodiment mentioned above, the example in which the screen display of all including the character, the pictogram, and the soft key that are displayed in the front liquid crystal 24 is comprehensively changed by switching the display mode has been described. However, the screen display of the all in the rear liquid crystal 26 can be comprehensively changed in a similar fashion. Additionally, while operating the front liquid crystal 24 in conjunction with the rear liquid crystal 26, the displaying size of the screen display of the all can be simultaneously changed.

By the exemplary embodiment, the displaying size of all of the character, the pictogram, the soft key, and the like that are displayed in the screen can be comprehensively changed in conjunction with the switching of the display mode. The switching of the display mode can be performed by pressing down of the menu number, long pressing of the numeric key in the wait screen, or the like. Therefore, the user can easily change the displaying size of the whole screen. Namely, the user can very easily perform the action of which, for example, when the user wants to perform a screen operation with the large character with respect to the menu operation, the user can set the enlarged display mode and uses it. And, when the user wants to display a lot of information in one screen when browsing screen or the like, the user can set the reduced display mode.

In the exemplary embodiment, only two kinds of modes, the reduced display mode and the enlarged display mode, are used. Therefore, even the user such as the elderly person or the like who is not familiar with the operation of the portable communication terminal can easily perform the operation of switching the display mode. Further, the display mode is not limited to two kinds of modes. It is obviously possible to increase the kinds of modes

By the exemplary embodiment, one portable telephone can have a screen focusing on viewing a large amount of information and a screen with a large character size focusing on the ease of reading. Until now, a portable telephone has been categorized as one for a senior person in which the character size is made large and the other for a young person in which a large amount of information is displayed. However, as the portable communication terminal has the switching function, the portable communication terminal including a new display that is acceptable to not only a user who likes a display in which a large amount of information is displayed but also a user who likes a display in which the minimum information is displayed can be provided.

Further, the program according to the present invention is configured with the program for executing a process shown in the flowchart of Fig. 4 that is executed by the control unit. A semiconductor storage unit, an optical and/or magnetic storage unit, or the like can be used as a computer-readable recording medium that records the program. When such program and recording medium are used in a system or the like including a configuration different from that of each exemplary embodiment mentioned above, and the above-mentioned program is executed by the control unit therein, the effect that is substantially the same as the effect of the present invention can be obtained.

The explanation has been made specifically based on the preferred embodiment. However, the present invention is not limited to the portable communication terminal, and the display method and the program therefor mentioned above, and it goes without saying that various changes can be made without departing from the gist of the invention

This application claims priority based on the Japanese Patent Application No. 2008-126501 filed on May 13th, 2008 and the disclosure of which is hereby incorporated in its entirety.

### [Description of symbol]

- 20: control unit
- 21: ROM
- 22: RAM
- 23: LCD driver 1
- 24: front liquid crystal
- 25: LCD driver 2
- 26: rear liquid crystal
- 28: button input unit
- 30: transmission and reception unit

## Claims

1. A portable communication terminal **characterized by** comprising:
a display unit displaying information;
a display mode switching unit performing a switching of a display mode which determines a character size displayed in the display unit;
a display mode selection input unit receiving a selection input of the display mode; and
a displaying size changing unit comprehensively changing the displaying size of all including a character, a pictogram, and a shift key displayed in the display unit based on the selection input of the display mode received by the display mode selection input unit.

2. The portable communication terminal according to claim 1 **characterized in that** the display mode selection input unit receives the selection input of the display mode by long pressing of a numeric key.

3. The portable communication terminal according to claim 1 or claim 2 **characterized by** including only two display modes, a reduced display mode and an enlarged display mode.

4. The portable communication terminal according to any one of claims 1 to 3 **characterized in that** the displaying size changing unit comprehensively change the displaying size of all including the pictogram and the shift key that are displayed in the display unit even if any language is displayed in the display unit.

5. A display method for a portable communication terminal **characterized by** including:
a step of receiving a selection input of a display mode which determines a character size displayed in a display unit for displaying information;
a step of performing a switching of the display mode; and
a step of comprehensively changing a displaying size of all including a character, a pictogram, and a shift key that are displayed in the display unit based on the selection input received in the step of receiving the selection input.

6. A program which causes a computer to execute:
a process for receiving a selection input of a display mode which determines a character size displayed in a display unit for displaying information;
a process for performing a switching of the display mode; and
a process for comprehensively changing a displaying size of all including a character, a pictogram, and a shift key displayed in the display unit based on the selection input received by the process for receiving the selection input.
